(19) **Europäisches Patentamt**
**European Patent Office**
**Office européen des brevets**

(11) **EP 4 633 248 A1**

(12) # EUROPEAN PATENT APPLICATION

(43) Date of publication:
**15.10.2025 Bulletin 2025/42**

(21) Application number: **25160126.6**

(22) Date of filing: **26.02.2025**

(51) International Patent Classification (IPC):
**H04W 52/02** (2009.01)   **H04L 25/49** (2006.01)
**H04L 27/02** (2006.01)   **H04L 27/26** (2006.01)

(52) Cooperative Patent Classification (CPC):
**H04L 25/4917; H04L 27/02; H04L 27/2602;
H04W 52/0229**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **10.04.2024 GB 202405116**

(71) Applicant: **Nokia Technologies Oy
02610 Espoo (FI)**

(72) Inventors:
• **VENKATRAMAN, Ganesh
Oulu (FI)**

• **KAIKKONEN, Jorma Johannes
Oulu (FI)**
• **KINNUNEN, Pasi Eino Tapio
Oulu (FI)**
• **SETHI, Alok
Oulu (FI)**
• **KNUDSEN, Knud
Aabybro (DK)**

(74) Representative: **Nokia EPO representatives
Nokia Technologies Oy
Karakaari 7
02610 Espoo (FI)**

(54) ## SIGNAL GENERATION

(57)    Embodiments relate to apparatuses and methods for generating an on-off keyed (OOK) signal. The apparatuses may comprise at least one processor and at least one memory storing instructions that when executed by the at least one processor cause the apparatus at least to perform: generating an on-off keyed signal for transmission over a set of symbols, at least one bit being conveyed within each symbol of the set of symbols and a payload of the on-off keyed signal being encoded using the at least one bit within each symbol of the set of symbols. An on and an off state for each bit is formed by at least one of the following: not generating a signal and generating a modulated waveform using frequency resources assigned for the on-off keyed signal. Generating the modulated waveform comprises modulating a waveform with a constant amplitude zero autocorrelation, CAZAC, sequence, wherein each generated modulated waveform within a single symbol of the set of symbols is modulated such that each generated modulated waveform is phase shifted with respect to each other. The apparatus is further caused to perform transmitting the on-off keyed signal to at least one user equipment.

FIG. 2

**Description**

TECHNOLOGICAL FIELD

Various example embodiments relate to signal generation and, in particular but not exclusively to, an apparatus and a method for generating signals using on-off keying.

BACKGROUND

Signals are generated for transmission within a communication network. Information bits may be carried over a signal using on-off keying (OOK) which uses the presence or absence of a signal to convey information.

Terminal devices in a communication network may be configured to operate, for example, in a low power mode. A low power wake up signal (LP-WUS) may be transmitted to a terminal device which 'wakes up' the terminal device from an idle state so that the terminal device can prepare to receive data. The LP-WUS may use OOK modulation.

It would be desirable to improve ways to generate OOK signals.

BRIEF SUMMARY

The scope of protection sought for various example embodiments of the invention is set out by the independent claims. The example embodiments and features, if any, described in this specification that do not fall under the scope of the independent claims are to be interpreted as examples useful for understanding various embodiments of the invention.

According to various, but not necessarily all, example embodiments of the invention there is provided an apparatus comprising: at least one processor; and at least one memory storing instructions that when executed by the at least one processor cause the apparatus at least to perform: generating an on-off keyed signal for transmission over a set of symbols, at least one bit being conveyed within each symbol of the set of symbols, a payload of the on-off keyed signal being encoded using the at least one bit within each symbol of the set of symbols, wherein an on and an off state for each bit is formed by at least one of the following: not generating a signal, and generating a modulated waveform using frequency resources assigned for the on-off keyed signal, generating the modulated waveform comprising modulating a waveform with a constant amplitude zero autocorrelation, CAZAC, sequence, wherein each generated modulated waveform within a single symbol of the set of symbols is modulated such that each generated modulated waveform is phase ramped with respect to each other; and transmitting the on-off keyed signal to at least one user equipment.

According to various, but not necessarily all, example embodiments of the invention there is provided an apparatus comprising: means for generating an on-off keyed signal for transmission over a set of symbols, at least one bit being conveyed within each symbol of the set of symbols, a payload of the on-off keyed signal being encoded using the at least one bit within each symbol of the set of symbols, wherein an on and an off state for each bit is formed by at least one of the following: not generating a signal, and generating a modulated waveform using frequency resources assigned for the on-off keyed signal, generating the modulated waveform comprising modulating a waveform with a constant amplitude zero autocorrelation, CAZAC, sequence, wherein each generated modulated waveform within a single symbol of the set of symbols is modulated such that each generated modulated waveform is phase ramped with respect to each other; and means for transmitting the on-off keyed signal to at least one user equipment.

According to various, but not necessarily all, example embodiments of the invention there is provided an apparatus comprising: circuitry configured to perform generating an on-off keyed signal for transmission over a set of symbols, at least one bit being conveyed within each symbol of the set of symbols, a payload of the on-off keyed signal being encoded using the at least one bit within each symbol of the set of symbols, wherein an on and an off state for each bit is formed by at least one of the following: not generating a signal, and generating a modulated waveform using frequency resources assigned for the on-off keyed signal, generating the modulated waveform comprising modulating a waveform with a constant amplitude zero autocorrelation, CAZAC, sequence, wherein each generated modulated waveform within a single symbol of the set of symbols is modulated such that each generated modulated waveform is phase ramped with respect to each other; and circuitry configured to perform transmitting the on-off keyed signal to at least one user equipment.

According to various, but not necessarily all, example embodiments of the invention there is provided an apparatus comprising: at least one processor; and at least one memory storing instructions that when executed by the at least one processor cause the apparatus at least to perform: receiving an on-off keyed signal over a set of symbols, at least one bit being conveyed within each symbol of the set of symbols, a payload of the on-off keyed signal being encoded using the at least one bit within each symbol of the set of symbols; determining from the on-off keyed signal the presence of an on or an off state for each bit within each symbol of the set of symbols based on at least one of the following: determining that no signal has been received, and determining that a modulated waveform using frequency resources assigned for the on-off keyed signal has been received, the modulated waveform having been generated by modulating a waveform with a CAZAC sequence, each generated modulated waveform within a single symbol of the set of symbols having been modulated such that each generated modulated waveform is phase ramped with respect to each other; decoding the payload based on the determined presence of an on or an off state for each bit within each symbol of the set of symbols; and determining at least one action to be performed based on the decoded payload.

According to various, but not necessarily all, example embodiments of the invention there is provided an apparatus comprising: means for receiving an on-off keyed signal over a set of symbols, at least one bit being conveyed within each symbol of the set of symbols, a payload of the on-off keyed signal being encoded using the at least one bit within each symbol of the set of symbols; means for determining from the on-off keyed signal the presence of an on or an off state for each bit within each symbol of the set of symbols based on at least one of the following: determining that no signal has been received, and determining that a modulated waveform using frequency resources assigned for the on-off keyed signal has been received, the modulated waveform having been generated by modulating a waveform with a CAZAC sequence, each generated modulated waveform within a single symbol of the set of symbols having been modulated such that each generated modulated waveform is phase ramped with respect to each other; means for decoding the payload based on the determined presence of an on or an off state for each bit within each symbol of the set of symbols; and means for determining at least one action to be performed based on the decoded payload.

According to various, but not necessarily all, example embodiments of the invention there is provided an apparatus comprising: circuitry configured to perform receiving an on-off keyed signal over a set of symbols, at least one bit being conveyed within each symbol of the set of symbols, a payload of the on-off keyed signal being encoded using the at least one bit within each symbol of the set of symbols; circuitry configured to perform determining from the on-off keyed signal the presence of an on or an off state for each bit within each symbol of the set of symbols based on at least one of the following: determining that no signal has been received, and determining that a modulated waveform using frequency resources assigned for the on-off keyed signal has been received, the modulated waveform having been generated by modulating a waveform with a CAZAC sequence, each generated modulated waveform within a single symbol of the set of symbols having been modulated such that each generated modulated waveform is phase ramped with respect to each other; circuitry configured to perform decoding the payload based on the determined presence of an on or an off state for each bit within each symbol of the set of symbols; and circuitry configured to perform determining at least one action to be performed based on the decoded payload.

According to various, but not necessarily all, example embodiments of the invention there is provided a method performed at a network node, the method comprising: generating an on-off keyed signal for transmission over a set of symbols, at least one bit being conveyed within each symbol of the set of symbols, a payload of the on-off keyed signal being encoded using the at least one bit within each symbol of the set of symbols, wherein an on and an off state for each bit is formed by at least one of the following: not generating a signal, and generating a modulated waveform using frequency resources assigned for the on-off keyed signal, generating the modulated waveform comprising modulating a waveform with a constant amplitude zero autocorrelation, CAZAC, sequence, wherein each generated modulated waveform within a single symbol of the set of symbols is modulated such that each generated modulated waveform is phase ramped with respect to each other; and transmitting the on-off keyed signal to at least one user equipment.

According to various, but not necessarily all, example embodiments of the invention there is provided a computer program comprising instructions which, when executed by an apparatus, cause the apparatus to perform: generating an on-off keyed signal for transmission over a set of symbols, at least one bit being conveyed within each symbol of the set of symbols, a payload of the on-off keyed signal being encoded using the at least one bit within each symbol of the set of symbols, wherein an on and an off state for each bit is formed by at least one of the following: not generating a signal, and generating a modulated waveform using frequency resources assigned for the on-off keyed signal, generating the modulated waveform comprising modulating a waveform with a constant amplitude zero autocorrelation, CAZAC, sequence, wherein each generated modulated waveform within a single symbol of the set of symbols is modulated such that each generated modulated waveform is phase ramped with respect to each other; and transmitting the on-off keyed signal to at least one user equipment.

According to various, but not necessarily all, example embodiments of the invention there is provided a non-transitory computer readable medium comprising program instructions stored thereon for performing at least the following: generating an on-off keyed signal for transmission over a set of symbols, at least one bit being conveyed within each symbol of the set of symbols, a payload of the on-off keyed signal being encoded using the at least one bit within each symbol of the set of symbols, wherein an on and an off state for each bit is formed by at least one of the following: not generating a signal, and generating a modulated waveform using frequency resources assigned for the on-off keyed signal, generating the modulated waveform comprising modulating a waveform with a constant amplitude zero autocorrelation, CAZAC, sequence, wherein each generated modulated waveform within a single symbol of the set of symbols is modulated such that each generated modulated waveform is phase ramped with respect to each other; and transmitting the on-off keyed signal to at least one user equipment.

According to various, but not necessarily all, example embodiments of the invention there is provided a method performed at a user equipment, the method comprising: receiving an on-off keyed signal over a set of symbols, at least one bit being conveyed within each symbol of the set of symbols, a payload of the on-off keyed signal being encoded using the at least one bit within each symbol of the set of symbols; determining from the on-off keyed signal the presence of an on or an off state for each bit within each symbol of the set of symbols based on at least one of the following: determining that no signal has been received, and determining that a modulated waveform using frequency resources assigned for the on-off keyed signal has been received, the modulated waveform having been generated by modulating a waveform with a CAZAC sequence, each generated modulated waveform within a single symbol of the set of symbols having been modulated such that each generated modulated waveform is phase ramped with respect to each other; decoding the payload based on the determined presence of an on or an off state for each bit within each symbol of the set of symbols; and determining at least one action to be performed based on the decoded payload.

According to various, but not necessarily all, example embodiments of the invention there is provided a computer program comprising instructions which, when executed by an apparatus, cause the apparatus to perform: receiving an on-off keyed signal over a set of symbols, at least one bit being conveyed within each symbol of the set of symbols, a payload of the on-off keyed signal being encoded using the at least one bit within each symbol of the set of symbols; determining from the on-off keyed signal the presence of an on or an off state for each bit within each symbol of the set of symbols based on at least one of the following: determining that no signal has been received, and determining that a modulated waveform using frequency resources assigned for the on-off keyed signal has been received, the modulated waveform having been generated by modulating a waveform with a CAZAC sequence, each generated modulated waveform within a single symbol of the set of symbols having been modulated such that each generated modulated waveform is phase ramped with respect to each other; decoding the payload based on the determined presence of an on or an off state for each bit within each symbol of the set of symbols; and determining at least one action to be performed based on the decoded payload.

According to various, but not necessarily all, example embodiments of the invention there is provided a non-transitory computer readable medium comprising program instructions stored thereon for performing at least the following: receiving an on-off keyed signal over a set of symbols, at least one bit being conveyed within each symbol of the set of symbols, a payload of the on-off keyed signal being encoded using the at least one bit within each symbol of the set of symbols; determining from the on-off keyed signal the presence of an on or an off state for each bit within each symbol of the set of symbols based on at least one of the following: determining that no signal has been received, and determining that a modulated waveform using frequency resources assigned for the on-off keyed signal has been received, the modulated waveform having been generated by modulating a waveform with a CAZAC sequence, each generated modulated waveform within a single symbol of the set of symbols having been modulated such that each generated modulated waveform is phase ramped with respect to each other; decoding the payload based on the determined presence of an on or an off state for each bit within each symbol of the set of symbols; and determining at least one action to be performed based on the decoded payload.

Further particular and preferred aspects are set out in the accompanying independent and dependent claims. Features of the dependent claims may be combined with features of the independent claims as appropriate, and in combinations other than those explicitly set out in the claims.

Where an apparatus feature is described as being operable to provide a function, it will be appreciated that this includes an apparatus feature which provides that function or which is adapted or configured to provide that function.

BRIEF DESCRIPTION

Some example embodiments will now be described with reference to the accompanying drawings in which:

FIG. 1 illustrates a scheme for generating OOK4 signals;
FIG. 2 illustrates a OOK signal, having modulation order one, generated in accordance with an embodiment;
FIG. 3 illustrates a OOK signal, having modulation order two, generated in accordance with an embodiment;
FIG. 4 illustrates a OOK signal, having modulation order four, generated in accordance with an embodiment;
FIG. 5 illustrates steps in a method according to an embodiment;
FIG. 6 illustrates steps in a method according to an embodiment;
FIG. 7 illustrates apparatuses according to embodiments.

DETAILED DESCRIPTION

In low power wake up signal (LP-WUS) signaling from a network node to a user equipment operating in a low power or idle mode, information bits are carried over an ON/OFF signal using on-off keying (OOK) modulation. The low power receiver (LR) of the user equipment can detect the OOK signal, sometimes referred to as the ON/OFF signal, in the time domain using an envelope detector. The generation of the OOK signal at the network node (e.g., a gNB) may be complicated depending on the number of ON/OFF transitions within a given time frame The time frame may be the duration of a symbol such as an equivalent NR OFDM symbol. The number of ON/OFF transitions is referred to as the modulation order, M, in 3GPP. If M=1, there is only one level within each symbol which can be in either an ON or an OFF state. In other words, when M=1, one bit is conveyed within each symbol which can either be an ON or an OFF signal. If M=2, then there can be two levels/bits within a symbol duration. Similarly, if M=4, then there can be four levels/bits within a symbol duration. Generating a OOK signal with a modulation level of one, termed as OOK1 in 3GPP, is quite easy as the sub-carriers in the frequency domain can be modulated with a random or with a known signal to create an ON signal. Alternatively, using all zeros on the sub-carriers creates a zero signal, thereby creating the OFF signal. In other words, the absence of a signal creates the OFF signal.

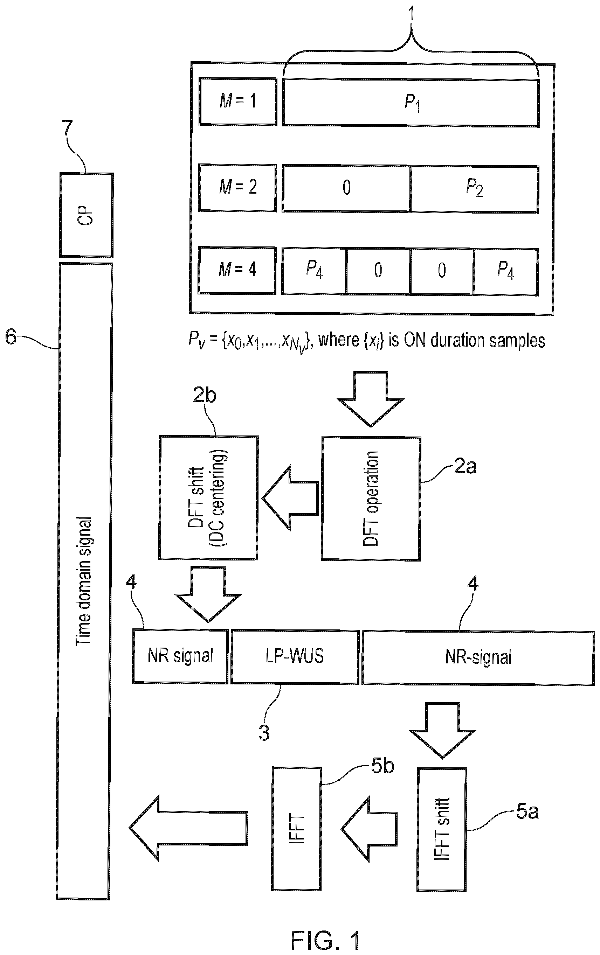

To improve the data rate of an OOK signal payload, such as for LP-WUS, the number of ON/OFF levels within a symbol duration can be increased - i.e., M>1 so more than one level/bit is conveyed within each symbol. In this way, the number of bits within the same time frame can be increased which increases the data rate. Where a Manchester encoding or the like is used to encode data, the number of transitions between the ON and the OFF state per given time frame may be increased by increasing the modulation order. Thus, when M≥2, the multiple bits within a single symbol may each be in either an ON state or an OFF state allowing both ON and OFF signals to exist within the symbol. This can be difficult to create as it currently requires the use of discrete Fourier transform (DFT) hardware (HW) at the network node to produce a waveform with the transition between OFF and ON states within a symbol. When M≥2, it is referred to as OOK4 in 3GPP literature and a sample generation scheme is shown in Fig. 1.

Fig. 1 shows that when M=1, there is only a single bit conveyed within the symbol 1. This bit may be in an OFF state which is formed by the network node generating no signal. Alternatively, as shown in Fig. 1, the bit may be in an ON state which is formed by the network node generating a signal P1. When M=2, the symbol 1 is split into two parts such that two bits are conveyed within the symbol. Each of these bits may be in an ON or an OFF state defined by the presence or absence of a signal P2. When M=4, the symbol 1 is split into four parts such that four bits are conveyed within the symbol. Each of these bits may be in an ON or an OFF state defined by the presence or absence of a signal P4. As the generated signals Pv for OOK4 signals are generated in the time domain representation, a DFT operation 2a is performed to convert the signal into a frequency domain representation. A DFT shift operation 2b is used to map this signal to the sub-carriers 3 which are assigned for LP-WUS signaling. The sub-carriers 3 assigned for LP-WUS signaling fall within the set of sub-carriers assigned for a NR transmission. In preparation for transmitting the LP-WUS, in steps 5a and 5b, the signal is converted back into a time domain representation 6 by using an inverse fast Fourier transform (iFFT). A cyclic prefix 7 is added to the time domain signal 6 to protect against inter-symbol interference. The LP-WUS is then ready to be transmitted to at least one user equipment.

Note that the ON duration provided by signal Pv may be generated with a known sequence that can be used by the LR of a user equipment with sequence detection capability to perform coherent detection via sequence correlation.

Due to there being multiple ON/OFF signal levels within an equivalent NR OFDM symbol, DFT HW seems to be imperative in the design. This will introduce difficulty in the sequence representation in 38.211 specification.

Whilst current OOK1 signal generation may be able to use frequency domain representation, OOK4 based signals are generated using time domain representation instead. As a result, there is a bifurcation in the specification meaning that unifying the waveform generation is not possible.

Embodiments propose unifying the design by providing an approach to generate both OOK4 and OOK1 signals using frequency domain signal representation. Specifically, embodiments propose modulating a signal generated using frequency domain signal representation with a constant amplitude zero autocorrelation (CAZAC) family sequence. Use of a CAZAC sequence enables each signal used to form an ON state of a bit to be modulated with a phase shifted version of the CAZAC sequence. Due to the orthogonality of the resulting signals, the signals may be transmitted within a single symbol without interference.

The proposed approach has the following benefits:

- Unified design capable of specifying both OOK1 and OOK4 waveforms, i.e., embodiments may cater for all values of M.
- If a DFT based approach using time domain representation is used, the gNB may need to specify the FFT size used in generation of the final NR OFDM symbol and the number of tones (sub-carriers) used for the LP-WUS to extract the fullest gain of the correlation. The proposed approach using frequency domain representation can avoid the need for the gNB to inform the user equipment of the FFT size, thereby reducing signaling.

To discuss the generation of the unified OOK waveform in accordance with embodiments, the following representation is used:

- M is the modulation order which indicates the number of OOK bits/levels available within an equivalent NR OFDM symbol. In other words, there are M distinct ON/OFF keying signals packed within an equivalent NR CP-OFDM symbol.
- $N_{WUS}$ is the number of tones (sub-carriers) allocated for LP-WUS transmission.

- $N_{NR}$ is the number of tones (sub-carriers) used for NR transmission.
- $P_k$ is a waveform, specifically a pulse shaping function, used to generate the pulse waveforms for creating the ON states of the bits. In other words, $P_k$ is the pulse shaping sequence/weights of length $N_{WUS}$ with k as the index, i.e., $k \in \{0,1, ..., N_{wus} - 1\}$.
- $X_k$ is a sequence/pulse waveform, formed by modulating Pk with a CAZAC sequence, mapped on to the LP-WUS tones (sub-carriers) at each tone k assigned for LP-WUS to obtain a pulse of duration corresponding the modulation order M.

For example, when M=2, embodiments generate a pulse having a duration of half a symbol such that there is space for two pulses within the symbol to create up to two ON state bits. When M=4, embodiments generate a pulse having a duration of one quarter of a symbol such that there is space for four pulses within the symbol which may be used to create four ON state bits.

Note that CAZAC waveforms are used for their superior frequency robustness and constant amplitude together with strong correlation peak. In some embodiments, a Zadoff-Chu sequence (a type of CAZAC sequence) is used for the LP-WUS waveform. Note that as the pulse generation uses an overlay CAZAC sequence, sequence correlation can be performed by sequence detectors in a terminal device to obtain sharper correlation, i.e., using coherent receiver.

In some embodiments, the CAZAC sequence comprises a chirp sequence. The chirp sequence can be generated by increasing the frequency linearly over a given duration between $[f_{min}, f_{max}]$ using both in-phase and quadrature components. It can also be referred to as a linear frequency modulated waveform. The chirp sequence can be used by an IQ based sequence detector to improve the detection performance by correlating the incoming OOK sequence. It may provide additional processing gain that improves detectability.

It will be appreciated that the list of CAZAC sequences provided above is non-limiting and that other types of CAZAC sequence may be used.

Using the above-described notations, the ON duration pulse waveform can be created using the pulse shaping function $P_k$ as:

$$x_k = p_k \times \exp\left(-j\pi \times k \times (k+1) \times \frac{1}{M} \times \frac{1}{N_{wus}}\right),$$

where the exponent function is a Zadoff-Chu sequence with root $\leq 1$, which is sometimes referred to as a chirp waveform, which falls under the CAZAC family.

A pulse waveform is generated for each ON state bit within each symbol. This pulse is always located in the beginning of the equivalent NR OFDM symbol. In order to locate the pulse waveforms at a given offset to have a desired time domain response, phase ramp is applied on the above pulse waveform in the frequency domain, which shifts the time domain OOK pulse waveform to a desired location. This is necessary when M>1. In other words, to position the pulse waveforms in the locations of a particular bit within the OFDM equivalent symbol duration, the respective pulse waveforms are shifted in the time domain by:

$$y_{m,k} = \exp\left(-j2\pi \times k \times \frac{m}{M}\right) \times x_k,$$

Thus, each generated pulse waveform is located within one of the bits conveyed within the symbol.

Adding all such pulses at the desired locations within the NR OFDM symbol in the frequency domain produces a complex waveform that can be populated in the frequency domain corresponding to LP-WUS allocation in the NR FFT symbol block. In other words, to obtain the signal for transmission in the frequency domain representation, summation can be carried out on each of the pulse waveforms within the symbol by:

$$z_k = \sum_{m=0}^{M-1} y_{m,k} \times w_m$$

which is dependent on the number of ON durations. In this equation, m denotes the bit index $m = \{0,1,.., M-1\}$, i.e., each bit instant within the sequence of encoded bits, and the value is denoted as $w_m$ such that $w_m = 1$ when there is a ON duration.

Once the tones (subcarriers) are populated together with NR adjacent signal, IFFT is performed followed by CP addition similar to the operations discussed in relation to Fig. 1. The network node may transmit this package to at least one user equipment.

The UE needs only the modulation order, M, and the bandwidth (BW) used for the LP-WUS transmission to generate the waveform for either an envelope detector (ED) or a sequence detector (SD) along with the pulse shaping, Pk. Hence, generation of the sequence art the LR of the user equipment is straightforward as there is no need to specify $N_{NR}$.

To generate the waveform for LR processing, LR may need the following.

- $N_{wus}$ - i.e., the number of tones allocated for LP-WUS or the LP-WUS BW used.
- $p_k$ - i.e., the pulse shaping sequence/weights of length $N_{wus}$ with k as the index, i.e., $k \in \{0,1, \ldots, N_{wus} - 1\}$.
- $M$ - i.e., the modulation order of OOK signal, i.e., $M$ distinct ON/OFF keying signals packed within an equivalent NR CP-OFDM symbol.

In some example embodiments, the UE performs sequence detection by correlating with the chirp sequence that spans the LP-WUS BW and for a duration determined by the OOK modulation order M, which can be generated using the following approach.

Once the following information is available at the LR, the generation is only a simple chirp sequence spanning the duration of $T_{wus} = \frac{T_{sym}}{M}$, where $T_{WUS}$ is the duration of each pulse and $T_{SYM}$ is the symbol duration. The BW used for chirp sequence generation is the LP-WUS BW, which can be obtained with as $N_{wus} \times SCS$ used for NR transmission where SCS is the sub-carrier spacing. Alternative, the sequence can be obtained as follows with the available information.

$$x_k = p_k \times \exp\left(-j\pi \times k \times (k+1) \times \frac{1}{M} \times \frac{1}{N_{wus}}\right), k \in \{0,1, \ldots, N_{wus} - 1\}$$

$$y_k = IFFT\{x_k, G\},$$

where $G$ **can** be the IFFT size considered by the LR, which is significantly less than the NR value used, i.e., $N_{wus} \ll G \ll N_{nr}$. Note that the symbols are mapped around the direct current subcarrier (DC) for proper correlation performance.

Note that the user equipment can use the same pulse $X_k$ as shown above as it knows the number of tones used for LP-WUS transmission or the bandwidth used for LP-WUS transmission. Placing the samples within the respective low power radio BW, IFFT can be performed to obtain the time domain sequence. This is then used for sequence correlation to provide processing gain for detection.

Once the sequence is generated for a single ON duration, correlation is performed using the sequence on the received signal to obtain the processing gain to determine the presence of an ON duration. This will benefit the sequence detectors as it improves the coverage.

Alternatively, in some example embodiments, the ON duration may carry a constellation that can provide additional information to the sequence detectors to ensure shorter active time compared to the envelope detector.

In some example embodiments, the packet error detection may be done as a cyclic redundancy check (CRC) check even if there is no CRC field.

In some example embodiments, the envelope detector only needs to generate the filter using the pulse shape $p_k$ spanning the duration of the ON pulse for correlation. Since it matches the transmit pulse, the post processing SNR is significantly higher than the one with arbitrary filter used by the receiver.

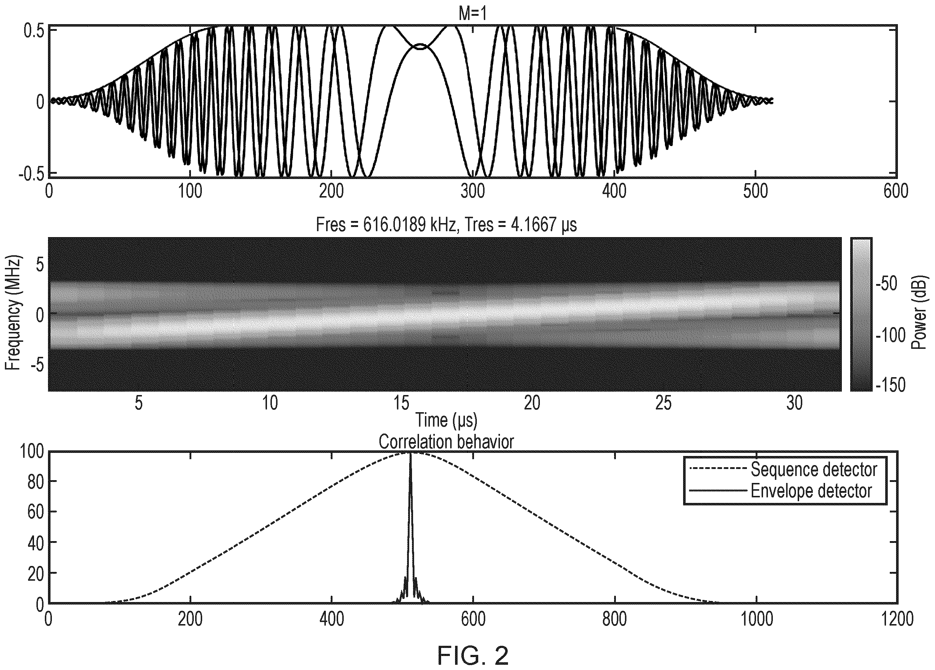

Figs. 2 to 4 illustrate exemplary signals generated for different modulation orders using the above-described unified scheme. In this Figs. 2 to 4, the sequence generation is performed for different M and the correlation performance of sequence detector and the envelope detectors are presented in the last subplots.

The case where M=1 is shown in Fig. 2. The top diagram shows a pulse waveform spanning the width of a symbol. The IQ components of the waveform are encompassed by the envelope of the pulse. In this embodiment, a flat top pulse has been generated. However, it will be appreciated that different shapes of pulse waveforms can be generated by varying the pulse shaping function $P_k$.

The middle diagram shows how use of the chirp sequence causes a change in the frequency across the duration of the pulse.

The bottom diagram shows the detected signal at a user equipment using sequence detection or envelope detection. In some embodiments, the user equipment comprises an envelope detector configured to detect the envelope of the OOK signal. In some embodiments, the user equipment comprises a sequence detector configured to use sequence correlation to identify the CAZAC sequence within the OOK signal such that the original pulse waveform may be determined by the user equipment.

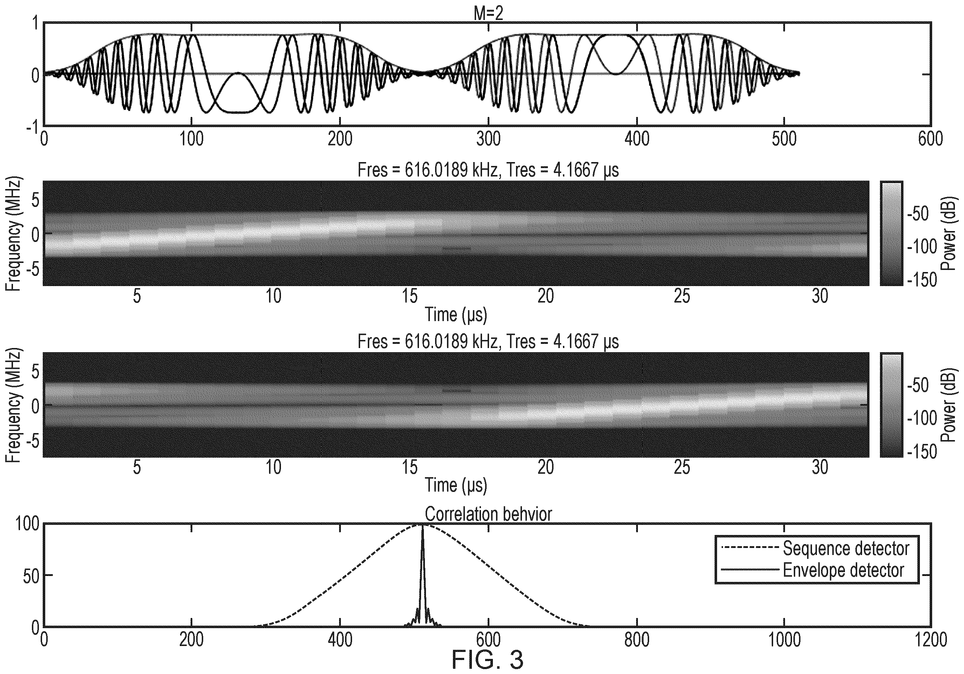

The case where M=2 is shown in Fig. 3. The top diagram shows how two pulse waveforms span the width of a symbol, i.e., both pulses together span the same time frame as the single pulse shown in the top diagram of Fig. 2 when M=1. In this way, embodiments may generate two pulses, one for each of the two bits conveyed within the symbol. Again, it will be appreciated that different pulse waveforms can be generated by varying the pulse shaping function $P_k$. The middle subplots show how each pulse generates a chirp sequence in a location corresponding to one of the bits being conveyed within the symbol. The bottom diagram shows one of the detected pulses received at a user equipment using sequence detection and envelope detection. The detected pulse envelope is half the width of the detected pulse shown in the bottom diagram of Fig. 2 when M=1.

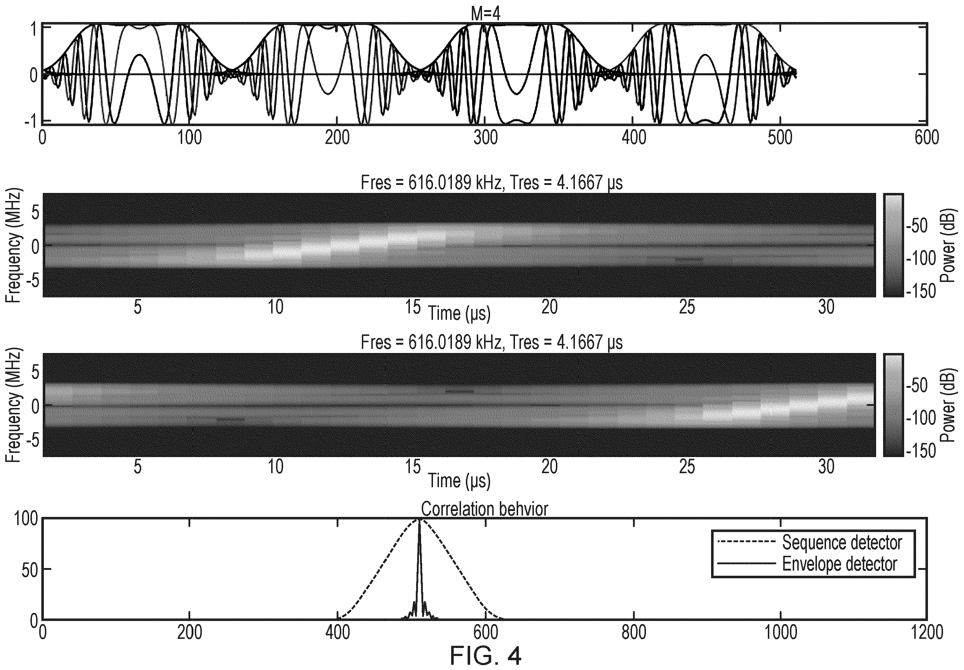

The case where M=4 is shown in Fig. 4. The top diagram shows how four pulse waveforms span the width of a symbol, i.e., all of the pulses together span the same time frame as the single pulse shown in the top diagram of Fig. 2 when M=1. In this way, embodiments may generate four pulses, one for each of the four bits conveyed within the symbol. Again, it will be appreciated that different pulse waveforms can be generated by varying the pulse shaping function $P_k$. The middle subplots show how one of these pulses generates a chirp sequence in a location corresponding to one of the bits being conveyed within the symbol. For clarity purposes, only two chirp sequences out of a possible four are shown. The bottom diagram shows one of the detected pulses received at a user equipment using sequence detection and envelope detection. The detected pulse envelope is one quarter of the width of the detected pulse shown in the bottom diagram of Fig. 2 when M=1.

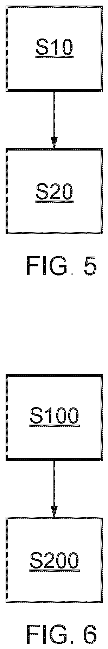

Fig. 5 illustrates the steps in a method according to an embodiment. The method may be performed by a network node. In step S10, the method comprises generating an on-off keyed, OOK, signal for transmission over a set of symbols, at least one bit being conveyed within each symbol. The on and the off state for each bit is formed by at least one of the following: not generating a signal, and generating a pulse waveform using subcarriers assigned for the OOK signal. Generating the pulse waveform comprises modulating a waveform with a CAZAC sequence, wherein each generated pulse waveform within a single symbol of the set of symbols is modulated such that each generated pulse waveform is phase ramped with respect to each other. In step S20, the method comprises transmitting the OOK signal to at least one user equipment.

Fig. 6 illustrates the steps in a method according to an embodiment. The method may be performed by a user equipment. In step S100, the method comprises detecting an OOK signal over a set of symbols, at least one bit being conveyed within each symbol. In step S200, the method comprises determining from the OOK signal the presence of an on or an off state for each bit within each symbol based on at least one of the following: determining that no signal has been received, and determining that a pulse waveform using subcarriers assigned for the OOK signal has been received. The pulse waveform having been generated by modulating a waveform with a CAZAC sequence and each generated pulse waveform within a single symbol of the set of symbols having been modulated such that each generated pulse waveform is phase ramped with respect to each other.

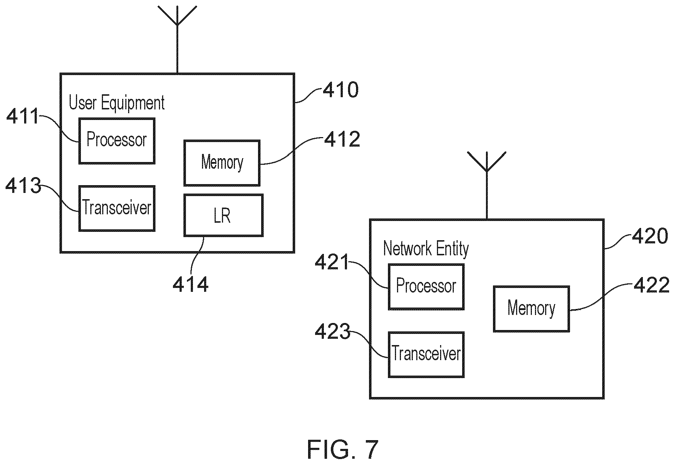

Fig. 7 shows a network node/entity 420 which may be configured to perform the method steps shown in Fig. 5. The network node 420 comprises at least one memory 422 which may store instructions executable by at least one processor 421 of the network node 420. The network node 420 may comprise a transceiver 423 for transmission and reception of radio signals. The network node may refer to at least one of the following non-limiting examples: an access node, a base station, a gNodeB and an eNodeB.

Fig. 7 further shows a user equipment 410 configured to perform the method steps shown in Fig. 6. The user equipment 410 comprises at least one memory 412 which may store instructions executable by at least one processor 411 of the user equipment 411. The user equipment 411 may comprise a transceiver 413 for transmission and reception of radio signals. The user equipment 411 may comprise a low power wake up receiver (LR) 414. The user equipment refers to any mobile end or terminal device that may be capable of wireless communication. By way of example rather than limitation, user equipment UE may also be referred to as a communication device, a terminal device, a Mobile Station (MS). The user equipment may include, but is not limited to, a mobile phone, a cellular phone, a smart phone, a tablet, a wearable terminal device, a personal digital assistant (PDA), vehicle-mounted wireless terminal devices, smart devices etc.

According to various, but not necessarily all, example embodiments of the invention there is provided an apparatus comprising: at least one processor; and at least one memory storing instructions that when executed by the at least one processor cause the apparatus at least to perform: generating an on-off keyed signal for transmission over a set of symbols, at least one bit being conveyed within each symbol of the set of symbols, a payload of the on-off keyed signal being encoded using the at least one bit within each symbol of the set of symbols, wherein an on and an off state for each bit is formed by at least one of the following: not generating a signal, and generating a modulated waveform using frequency resources assigned for the on-off keyed signal, generating the modulated waveform comprising modulating a waveform with a constant amplitude zero autocorrelation, CAZAC, sequence, wherein each generated modulated waveform within a single symbol of the set of symbols is modulated such that each generated modulated waveform is phase ramped with respect to each other; and transmitting the on-off keyed signal to at least one user equipment.

OOK signals, particularly OOK4 signals in which two or four bits are conveyed in every symbol, are conventionally generated using a time domain representation. However, this requires use of discrete Fourier transform (DFT) at the apparatus (e.g., a network node) to produce the waveform. It may additionally require the apparatus to inform the at least one user equipment receiving the OOK signal of the size of the DFT. Moreover, OOK1 signals in which only one bit is transmitted per symbol may be generated using frequency domain representation. However, this means that there is no unified method for generating both OOK1 and OOK4 signals.

The proposed approach uses the presence or absence of pulse waveforms using the subcarriers assigned for an OOK signal to create the on and off states of a bit. Furthermore, multiple pulse waveforms defining multiple bits within a symbol may be produced by modulating the pulse shaping function for each bit with a CAZAC sequence, each CAZAC sequence being phase shifted with respect to each other. In this way, OOK1 and OOK4 signals can both be generated using the frequency domain signal representation. Therefore, the proposed approach provides a unified method for generating both OOK1 and OOK4 signals. Furthermore, as the OOK signal is generated in the frequency domain signal representation, there is no need for the apparatus to perform a DFT operation and thus no need to signal the size of the DFT to the user equipment. As a result, the complexity of the apparatus and the network signalling may both be reduced.

In this context, the at least one bit being conveyed within each symbol for transmission of the OOK symbol refers to the number of time periods within a symbol which may be in an ON or an OFF state. In alternative notation, the ON and the OFF state may be denoted as a 1 and a 0. The number of bits may be defined by the modulation level, M. For example, when M=1, there is only one bit within the symbol which can either be ON or OFF. In this case, the generated signal is known as an OOK1 signal. When M=4, there are four bits within the symbol which can each either be ON or OFF. In this case, the generated signal is known as an OOK4 signal.

To achieve a delay or shift in the time domain such that the generated modulated waveforms are located at their respective bit positions within the symbol, phase ramping is used to achieve this from the frequency domain.

In some example embodiments, the frequency resources assigned for the on-off keyed signal comprise subcarriers assigned for the on-off keyed signal.

In some example embodiments, at least two bits are conveyed within each symbol.

In some example embodiments, at least four bits are conveyed within each symbol.

The larger the number of bits conveyed within a symbol, the greater the potential data transmission rate. It will be appreciated that an apparatus configured to generate OOK signals when two or more bits are conveyed within each symbol may also be capable of generating an OOK signal when only one bit is conveyed within each symbol. For example, the apparatus may be capable of generating OOK1 and OOK 4 signals.

In some example embodiments, the waveform comprises a pulse shaping function. In this way, the modulated waveform comprises a pulse waveform.

In some example embodiments, the CAZAC sequence comprises a chirp sequence.

Use of a chirp sequence means the frequency of the pulse waveform is steadily increasing or decreasing throughout the pulse. This may facilitate sequence correlation performed at the UE, thus potentially improving signal detection. The sequence can be generated by increasing the frequency linearly over a given duration between $[f_{min}, f_{max}]$ using both in-phase and quadrature components. It can also be referred to as a linear frequency modulated waveform.

In some example embodiments, the CAZAC sequence comprises a Zadoff-Chu (ZC) sequence.

By using different phase ramps over ZC sequence (root <= 1) in frequency domain, there is introduced a time offset of pulse within an equivalent NR OFDM symbol.

In some example embodiments, generating the OOK signal comprises summing each generated pulse waveform within a single symbol of the set of symbols.

In some example embodiments, the payload of the on-off keyed signal is encoded using transitions between the on and the off state. In some embodiments, the payload of the on-off keyed signal is encoded based on a Manchester encoding. It will be appreciated that other encoding techniques may be used.

It follows that the number of encoded data bits within a symbol may be less than number of bits (ON/OFF opportunities) being conveyed within a symbol because the number of transitions between the ON and the OFF states may be less than the number of bits being conveyed.

In some example embodiments, the off state for each bit is defined by not generating a signal and the on state for each bit is defined by generating the pulse waveform.

In some embodiments, the set of symbols is a set of orthogonal frequency division multiplexing, OFDM, symbols. In some example embodiments, the subcarriers are OFDM subcarriers. In some example embodiments, the OOK signal is an OFDM OOK signal.

In some example embodiments, the OOK signal comprises a low power wake-up signal for the at least one user equipment.

In some embodiments, the apparatus comprises a network node. In some embodiments, the network node comprises at least one of the following: an access node, a base station, a gNodeB and an eNodeB.

According to various, but not necessarily all, example embodiments of the invention there is provided an apparatus comprising: means for generating an on-off keyed signal for transmission over a set of symbols, at least one bit being conveyed within each symbol of the set of symbols, a payload of the on-off keyed signal being encoded using the at least one bit within each symbol of the set of symbols, wherein an on and an off state for each bit is formed by at least one of the following: not generating a signal, and generating a modulated waveform using frequency resources assigned for the on-off keyed signal, generating the modulated waveform comprising modulating a waveform with a constant amplitude zero autocorrelation, CAZAC, sequence, wherein each generated modulated waveform within a single symbol of the set of symbols is modulated such that each generated modulated waveform is phase ramped with respect to each other; and means for transmitting the on-off keyed signal to at least one user equipment.

The means may perform the optional features set out in relation to the apparatus mentioned above.

The processor, memory, and example algorithms, encoded as instructions, program, or code, may be the means for providing or causing the performance of the operation.

According to various, but not necessarily all, example embodiments of the invention there is provided an apparatus comprising: circuitry configured to perform generating an on-off keyed signal for transmission over a set of symbols, at least one bit being conveyed within each symbol of the set of symbols, a payload of the on-off keyed signal being encoded using the at least one bit within each symbol of the set of symbols, wherein an on and an off state for each bit is formed by at least one of the following: not generating a signal, and generating a modulated waveform using frequency resources assigned for the on-off keyed signal, generating the modulated waveform comprising modulating a waveform with a constant amplitude zero autocorrelation, CAZAC, sequence, wherein each generated modulated waveform within a single symbol of the set of symbols is modulated such that each generated modulated waveform is phase ramped with respect to each other; and circuitry configured to perform transmitting the on-off keyed signal to at least one user equipment.

The circuitry may be configured perform the optional features set out in relation to the apparatus mentioned above.

According to various, but not necessarily all, example embodiments of the invention there is provided an apparatus comprising: at least one processor; and at least one memory storing instructions that when executed by the at least one processor cause the apparatus at least to perform: receiving an on-off keyed signal over a set of symbols, at least one bit being conveyed within each symbol of the set of symbols, a payload of the on-off keyed signal being encoded using the at least one bit within each symbol of the set of symbols; determining from the on-off keyed signal the presence of an on or an off state for each bit within each symbol of the set of symbols based on at least one of the following: determining that no signal has been received, and determining that a modulated waveform using frequency resources assigned for the on-off keyed signal has been received, the modulated waveform having been generated by modulating a waveform with a CAZAC sequence, each generated modulated waveform within a single symbol of the set of symbols having been modulated such that each generated modulated waveform is phase ramped with respect to each other; decoding the payload based on the determined presence of an on or an off state for each bit within each symbol of the set of symbols; and determining at least one action to be performed based on the decoded payload.

In some example embodiments, the waveform comprises a pulse shaping function.

In some example embodiments, the frequency resources assigned for the OOK signal comprise subcarriers assigned for the OOK signal.

In some example embodiments, at least two bits are conveyed within each symbol.

In some example embodiments, at least four bits are conveyed within each symbol.

In some example embodiments, the determining that a modulated waveform using frequency resources assigned for the on-off keyed signal has been received comprises at least one of: detecting an envelope of each modulated waveform; and detecting the CAZAC sequence within each modulated waveform.

In other words, the apparatus may perform envelope detection or sequence detection. When the detecting comprises detecting the CAZAC sequence within each pulse waveform, if the signal was generated by the network node in the time domain representation, the user equipment would need to know the DFT size. However, this is not the case for example embodiments because the OOK signal has been generated in the frequency domain representation.

In some example embodiments, when the detecting comprises detecting the CAZAC sequence within each modulated waveform, determining the presence of an on state comprises identifying the CAZAC sequence within the modulated waveform.

In other words, the apparatus performs sequence correlation to identify the modulated waveforms which may define the on state.

In some example embodiments, when the detecting comprises detecting the CAZAC sequence within each modulated waveform, the apparatus is preconfigured with an indication of the CAZAC sequence.

To perform sequence correlation for sequence detection, the apparatus may be sent an indication of the CAZAC sequence before the detection of the OOK signal. Alternatively, the CAZAC sequence may be predetermined by the network. Once the apparatus has obtained an indication of the CAZAC sequence, the apparatus may be able to perform coherent detection via sequence correlation.

In some example embodiments, the apparatus is preconfigured with an indication of at least one of: a number of bits being conveyed within each symbol; the set of symbols; The frequency resources assigned for the OOK signal; and the waveform.

The apparatus may use this information to process the detected OOK signal. The apparatus may receive an indication of this information from the network before detecting the OOK signal. However, note that it does not need to know a DFT size which would be required if the OOK signal was generated using time domain signal representation.

In some example embodiments, the OOK signal comprises a low power wake up signal and the at least one action to be performed comprises: beginning to monitor at least one of: paging and PDCCH. In this way, in response to detecting the low power wake up signal, the user equipment is caused to begin monitoring at least one of paging and PDCCH.

In some example embodiments, the apparatus is further caused to: perform the at least one action.

In some example embodiments, the apparatus comprises a user equipment.

According to various, but not necessarily all, example embodiments of the invention there is provided an apparatus comprising: means for receiving an on-off keyed signal over a set of symbols, at least one bit being conveyed within each symbol of the set of symbols, a payload of the on-off keyed signal being encoded using the at least one bit within each symbol of the set of symbols; means for determining from the on-off keyed signal the presence of an on or an off state for each bit within each symbol of the set of symbols based on at least one of the following: determining that no signal has been received, and determining that a modulated waveform using frequency resources assigned for the on-off keyed signal has been received, the modulated waveform having been generated by modulating a waveform with a CAZAC sequence, each generated modulated waveform within a single symbol of the set of symbols having been modulated such that each generated modulated waveform is phase ramped with respect to each other; means for decoding the payload based on the determined presence of an on or an off state for each bit within each symbol of the set of symbols; and means for determining at least one action to be performed based on the decoded payload.

The means may perform the optional features set out in relation to the apparatus mentioned above.

The processor, memory, and example algorithms, encoded as instructions, program, or code, may be the means for providing or causing the performance of the operation.

According to various, but not necessarily all, example embodiments of the invention there is provided an apparatus comprising: circuitry configured to perform receiving an on-off keyed signal over a set of symbols, at least one bit being conveyed within each symbol of the set of symbols, a payload of the on-off keyed signal being encoded using the at least one bit within each symbol of the set of symbols; circuitry configured to perform determining from the on-off keyed signal the presence of an on or an off state for each bit within each symbol of the set of symbols based on at least one of the following: determining that no signal has been received, and determining that a modulated waveform using frequency resources assigned for the on-off keyed signal has been received, the modulated waveform having been generated by modulating a waveform with a CAZAC sequence, each generated modulated waveform within a single symbol of the set of symbols having been modulated such that each generated modulated waveform is phase ramped with respect to each other; circuitry configured to perform decoding the payload based on the determined presence of an on or an off state for each bit within each symbol of the set of symbols; and circuitry configured to perform determining at least one action to be performed based on the decoded payload.

The circuitry may be configured perform the optional features set out in relation to the apparatus mentioned above.

According to various, but not necessarily all, example embodiments of the invention there is provided a method performed at a network node, the method comprising: generating an on-off keyed signal for transmission over a set of symbols, at least one bit being conveyed within each symbol of the set of symbols, a payload of the on-off keyed signal being encoded using the at least one bit within each symbol of the set of symbols, wherein an on and an off state for each bit is formed by at least one of the following: not generating a signal, and generating a modulated waveform using frequency resources assigned for the on-off keyed signal, generating the modulated waveform comprising modulating a waveform with a constant amplitude zero autocorrelation, CAZAC, sequence, wherein each generated modulated waveform within a single symbol of the set of symbols is modulated such that each generated modulated waveform is phase ramped with respect to each other; and transmitting the on-off keyed signal to at least one user equipment.

In some example embodiments, the frequency resources assigned for the on-off keyed signal comprise subcarriers assigned for the on-off keyed signal. In some example embodiments, at least two bits are conveyed within each symbol. In some example embodiments, at least four bits are conveyed within each symbol. In some example embodiments, the waveform comprises a pulse shaping function. In some example embodiments, the CAZAC sequence comprises a chirp sequence. In some example embodiments, the CAZAC sequence comprises a Zadoff-Chu sequence. In some example embodiments, generating the OOK signal comprises summing each generated pulse waveform within a single symbol of the set of symbols. In some example embodiments, the payload of the on-off keyed signal is encoded using transitions between the on and the off state. In some embodiments, the payload of the on-off keyed signal is encoded based on a Manchester encoding. In some example embodiments, the off state for each bit is defined by not generating a signal and the on state for each bit is defined by generating the pulse waveform. In some embodiments, the set of symbols is a set of orthogonal frequency division multiplexing, OFDM, symbols. In some example embodiments, the subcarriers are OFDM subcarriers. In some example embodiments, the OOK signal is an OFDM OOK signal. In some example embodiments, the OOK signal comprises a low power wake-up signal for the at least one user equipment. In some embodiments, the method is performed by a network node. In some embodiments, the network node comprises at least one of the following: an access node, a base station, a gNodeB and an eNodeB.

According to various, but not necessarily all, example embodiments of the invention there is provided a computer program comprising instructions which, when executed by an apparatus, cause the apparatus to perform: generating an on-off keyed signal for transmission over a set of symbols, at least one bit being conveyed within each symbol of the set of symbols, a payload of the on-off keyed signal being encoded using the at least one bit within each symbol of the set of symbols, wherein an on and an off state for each bit is formed by at least one of the following: not generating a signal, and generating a modulated waveform using frequency resources assigned for the on-off keyed signal, generating the modulated waveform comprising modulating a waveform with a constant amplitude zero autocorrelation, CAZAC, sequence, wherein each generated modulated waveform within a single symbol of the set of symbols is modulated such that each generated modulated waveform is phase ramped with respect to each other; and transmitting the on-off keyed signal to at least one user equipment.

The computer program instructions may cause the apparatus to perform the optional features set out in relation to the method mentioned above.

According to various, but not necessarily all, example embodiments of the invention there is provided a non-transitory computer readable medium comprising program instructions stored thereon for performing at least the following: generating an on-off keyed signal for transmission over a set of symbols, at least one bit being conveyed within each symbol of the set of symbols, a payload of the on-off keyed signal being encoded using the at least one bit within each symbol of the set of symbols, wherein an on and an off state for each bit is formed by at least one of the following: not generating a signal, and generating a modulated waveform using frequency resources assigned for the on-off keyed signal, generating the modulated waveform comprising modulating a waveform with a constant amplitude zero autocorrelation, CAZAC, sequence, wherein each generated modulated waveform within a single symbol of the set of symbols is modulated such that each generated modulated waveform is phase ramped with respect to each other; and transmitting the on-off keyed signal to at least one user equipment.

The instructions may be for performing the optional features set out in relation to the method mentioned above.

According to various, but not necessarily all, example embodiments of the invention there is provided a method performed at a user equipment, the method comprising: receiving an on-off keyed signal over a set of symbols, at least one bit being conveyed within each symbol of the set of symbols, a payload of the on-off keyed signal being encoded using the at least one bit within each symbol of the set of symbols; determining from the on-off keyed signal the presence of an on or an off state for each bit within each symbol of the set of symbols based on at least one of the following: determining that no signal has been received, and determining that a modulated waveform using frequency resources assigned for the on-off keyed signal has been received, the modulated waveform having been generated by modulating a waveform with a CAZAC sequence, each generated modulated waveform within a single symbol of the set of symbols having been modulated such that each generated modulated waveform is phase ramped with respect to each other; decoding the payload based on the determined presence of an on or an off state for each bit within each symbol of the set of symbols; and determining at least one action to be performed based on the decoded payload.

In some example embodiments, the waveform comprises a pulse shaping function. In some example embodiments, the frequency resources assigned for the OOK signal comprise subcarriers assigned for the OOK signal. In some example embodiments, at least two bits are conveyed within each symbol. In some example embodiments, at least four bits are conveyed within each symbol. In some example embodiments, the determining that a modulated waveform using frequency resources assigned for the on-off keyed signal has been received comprises at least one of: detecting an envelope of each modulated waveform; and detecting the CAZAC sequence within each modulated waveform. In some example embodiments, when the detecting comprises detecting the CAZAC sequence within each modulated waveform, determining the presence of an on state comprises identifying the CAZAC sequence within the modulated waveform. In some example embodiments, when the detecting comprises detecting the CAZAC sequence within each modulated waveform, the method further comprises obtaining an indication of the CAZAC sequence prior to detecting the OOK signal. In some example embodiments, the method further comprises obtaining, prior to detecting the OOK signal, an indication of at least one of: a number of bits being conveyed within each symbol; the set of symbols; the frequency resources assigned for the OOK signal; and the waveform. In some example embodiments, the OOK signal comprises a low power wake up signal and the at least one action to be performed comprises: beginning to monitor at least one of the following: paging and PDCCH. In this way, the method comprises beginning to monitor at least one of: paging and PDCCH in response to detecting the low power wake up signal. In some example embodiments, the method is performed by a user equipment.

According to various, but not necessarily all, example embodiments of the invention there is provided a computer program comprising instructions which, when executed by an apparatus, cause the apparatus to perform: receiving an on-off keyed signal over a set of symbols, at least one bit being conveyed within each symbol of the set of symbols, a payload of the on-off keyed signal being encoded using the at least one bit within each symbol of the set of symbols; determining from the on-off keyed signal the presence of an on or an off state for each bit within each symbol of the set of symbols based on at least one of the following: determining that no signal has been received, and determining that a modulated waveform using frequency resources assigned for the on-off keyed signal has been received, the modulated waveform having been generated by modulating a waveform with a CAZAC sequence, each generated modulated waveform within a single symbol of the set of symbols having been modulated such that each generated modulated waveform is phase ramped with respect to each other; decoding the payload based on the determined presence of an on or an off state for each bit within each symbol of the set of symbols; and determining at least one action to be performed based on the decoded payload.

The computer program instructions may cause the apparatus to perform the optional features set out in relation to the method mentioned above.

According to various, but not necessarily all, example embodiments of the invention there is provided a non-transitory computer readable medium comprising program instructions stored thereon for performing at least the following: receiving an on-off keyed signal over a set of symbols, at least one bit being conveyed within each symbol of the set of symbols, a payload of the on-off keyed signal being encoded using the at least one bit within each symbol of the set of symbols; determining from the on-off keyed signal the presence of an on or an off state for each bit within each symbol of the set of symbols based on at least one of the following: determining that no signal has been received, and determining that a modulated waveform using frequency resources assigned for the on-off keyed signal has been received, the modulated waveform having been generated by modulating a waveform with a CAZAC sequence, each generated modulated waveform within a single symbol of the set of symbols having been modulated such that each generated modulated waveform is phase ramped with respect to each other; decoding the payload based on the determined presence of an on or an off state for each bit within each symbol of the set of symbols; and determining at least one action to be performed based on the decoded payload.

The instructions may be for performing the optional features set out in relation to the method mentioned above.

According to various, but not necessarily all, example embodiments of the invention there is provided an apparatus comprising: at least one processor; and at least one memory storing instructions that when executed by the at least one processor cause the apparatus at least to perform: receiving an on-off keyed signal over a set of symbols, at least one bit being conveyed within each symbol of the set of symbols, a payload of the on-off keyed signal being encoded using the at least one bit within each symbol of the set of symbols; determining from the on-off keyed signal the presence of an on or an off state for each bit within each symbol of the set of symbols based on at least one of the following: determining that no signal has been received, and determining that a modulated waveform using frequency resources assigned for the on-off keyed signal has been received, the modulated waveform having been generated by modulating a waveform with a CAZAC sequence, each generated modulated waveform within a single symbol of the set of symbols having been modulated such that each generated modulated waveform is phase ramped with respect to each other, wherein the determining that a modulated waveform using frequency resources assigned for the on-off keyed signal has been received comprises detecting the CAZAC sequence within each modulated waveform; decoding the payload based on the determined presence of an on or an off state for each bit within each symbol of the set of symbols; and determining at least one action to be performed based on the decoded payload.

The OOK signal may be from a network node. In some embodiments, the network node comprises at least one of the following: an access node, a base station, a gNodeB and an eNodeB.

Embodiments propose performing sequence detection at the apparatus by detecting the CAZAC sequence within each pulse waveform. In this way, the original pulse waveform used by the network node to create the ON state for a bit within the symbols can be recovered at the apparatus. Since the pulse waveform has not been generated using time domain representation but rather by using frequency domain representation, the apparatus does not need to know a DFT size in order to recover the pulse waveform. Hence operations at the apparatus may be simplified.

In some example embodiments, the frequency resources assigned for the OOK signal comprise subcarriers assigned for the OOK signal.

In some example embodiments, the waveform comprises a pulse shaping function.

In some example embodiments, at least two bits are conveyed within each symbol.

In some example embodiments, at least four bits are conveyed within each symbol.

In some example embodiments, determining the presence of an on state comprises identifying the CAZAC sequence within the modulated waveform. This may be referred to as sequence correlation.

In some example embodiments, the apparatus is further caused to perform, prior to detecting the OOK signal, receiving an indication of the CAZAC sequence.

The CAZAC sequence may be obtained by the apparatus through broadcast signalling or by dedicated signalling from the network.

In some example embodiments, the apparatus is further caused to perform, prior to detecting the OOK signal, receiving an indication of at least one of the following: a number of bits being conveyed within each symbol; the set of symbols; the frequency resources assigned for the OOK signal; and the waveform.

In some example embodiments, the OOK signal comprises a low power wake up signal and the at least one action to be performed comprises: beginning to monitor at least one of the following: paging and PDCCH. In this way, in response to detecting the low power wake up signal, the apparatus is caused to begin monitoring at least one of paging and PDCCH.

In some example embodiments, the apparatus is further caused to: perform the at least one action.

In some example embodiments, the apparatus is configured to detect the low power wake up signal whilst operating in a low power mode.

In some example embodiments, the apparatus comprises a user equipment.

According to various, but not necessarily all, example embodiments of the invention there is provided an apparatus comprising: means for receiving an on-off keyed signal over a set of symbols, at least one bit being conveyed within each symbol of the set of symbols, a payload of the on-off keyed signal being encoded using the at least one bit within each symbol of the set of symbols; means for determining from the on-off keyed signal the presence of an on or an off state for each bit within each symbol of the set of symbols based on at least one of the following: determining that no signal has been received, and determining that a modulated waveform using frequency resources assigned for the on-off keyed signal has been received, the modulated waveform having been generated by modulating a waveform with a CAZAC sequence, each generated modulated waveform within a single symbol of the set of symbols having been modulated such that each generated modulated waveform is phase ramped with respect to each other, wherein the determining that a modulated waveform using frequency resources assigned for the on-off keyed signal has been received comprises detecting the CAZAC sequence within each modulated waveform; means for decoding the payload based on the determined presence of an on or an off state for each bit within each symbol of the set of symbols; and means for determining at least one action to be performed based on the decoded payload.

The means may perform the optional features set out in relation to the apparatus mentioned above.

The processor, memory, and example algorithms, encoded as instructions, program, or code, may be the means for providing or causing the performance of the operation.

According to various, but not necessarily all, example embodiments of the invention there is provided an apparatus comprising: circuitry configured to perform receiving an on-off keyed signal over a set of symbols, at least one bit being conveyed within each symbol of the set of symbols, a payload of the on-off keyed signal being encoded using the at least one bit within each symbol of the set of symbols; circuitry configured to perform determining from the on-off keyed signal the presence of an on or an off state for each bit within each symbol of the set of symbols based on at least one of the following: determining that no signal has been received, and determining that a modulated waveform using frequency resources assigned for the on-off keyed signal has been received, the modulated waveform having been generated by modulating a waveform with a CAZAC sequence, each generated modulated waveform within a single symbol of the set of symbols having been modulated such that each generated modulated waveform is phase ramped with respect to each other, wherein the determining that a modulated waveform using frequency resources assigned for the on-off keyed signal has been received comprises detecting the CAZAC sequence within each modulated waveform; circuitry configured to perform decoding the payload based on the determined presence of an on or an off state for each bit within each symbol of the set of symbols; and circuitry configured to perform determining at least one action to be performed based on the decoded payload.

The circuitry may be configured perform the optional features set out in relation to the apparatus mentioned above.

According to various, but not necessarily all, example embodiments of the invention there is provided a method performed at a user equipment, the method comprising: receiving an on-off keyed signal over a set of symbols, at least one bit being conveyed within each symbol of the set of symbols, a payload of the on-off keyed signal being encoded using the at least one bit within each symbol of the set of symbols; determining from the on-off keyed signal the presence of an on or an off state for each bit within each symbol of the set of symbols based on at least one of the following: determining that no signal has been received, and determining that a modulated waveform using frequency resources assigned for the on-off keyed signal has been received, the modulated waveform having been generated by modulating a waveform with a CAZAC sequence, each generated modulated waveform within a single symbol of the set of symbols having been modulated such that each generated modulated waveform is phase ramped with respect to each other, wherein the determining that a modulated waveform using frequency resources assigned for the on-off keyed signal has been received comprises detecting the CAZAC sequence within each modulated waveform; decoding the payload based on the determined presence of an on or an off state for each bit within each symbol of the set of symbols; and determining at least one action to be performed based on the decoded payload.

In some example embodiments, the frequency resources assigned for the OOK signal comprise subcarriers assigned for the OOK signal. In some example embodiments, the waveform comprises a pulse shaping function. In some example embodiments, at least two bits are conveyed within each symbol. In some example embodiments, at least four bits are conveyed within each symbol. In some example embodiments, determining the presence of an on state comprises identifying the CAZAC sequence within the modulated waveform. In some example embodiments, the method further comprises, prior to detecting the OOK signal, receiving an indication of the CAZAC sequence. In some example embodiments, the method further comprises prior to detecting the OOK signal, receiving an indication of at least one of the following: a number of bits being conveyed within each symbol; the set of symbols; the frequency resources assigned for the OOK signal; and the waveform. In some example embodiments, the OOK signal is a low power wake up signal and the at least one action to be performed comprises: beginning to monitor at least one of the following: paging and PDCCH. In this way, method may further comprise: beginning to monitor at least one of paging and PDCCH in response to detecting the low power wake up signal. In some example embodiments, the method further comprises detecting the low power wake up signal whilst operating in a low power mode. In some example embodiments, the method is performed by a user equipment.

According to various, but not necessarily all, example embodiments of the invention there is provided a computer program comprising instructions which, when executed by an apparatus, cause the apparatus to perform at least the following: receiving an on-off keyed signal over a set of symbols, at least one bit being conveyed within each symbol of the set of symbols, a payload of the on-off keyed signal being encoded using the at least one bit within each symbol of the set of symbols; determining from the on-off keyed signal the presence of an on or an off state for each bit within each symbol of the set of symbols based on at least one of the following: determining that no signal has been received, and determining that a modulated waveform using frequency resources assigned for the on-off keyed signal has been received, the modulated waveform having been generated by modulating a waveform with a CAZAC sequence, each generated modulated waveform within a single symbol of the set of symbols having been modulated such that each generated modulated waveform is phase ramped with respect to each other, wherein the determining that a modulated waveform using frequency resources assigned for the on-off keyed signal has been received comprises detecting the CAZAC sequence within each modulated waveform; decoding the payload based on the determined presence of an on or an off state for each bit within each symbol of the set of symbols; and determining at least one action to be performed based on the decoded payload.

The computer program instructions may cause the apparatus to perform the optional features set out in relation to the method mentioned above.

According to various, but not necessarily all, example embodiments of the invention there is provided a non-transitory computer readable medium comprising program instructions stored thereon for performing at least the following: receiving an on-off keyed signal over a set of symbols, at least one bit being conveyed within each symbol of the set of symbols, a payload of the on-off keyed signal being encoded using the at least one bit within each symbol of the set of symbols; determining from the on-off keyed signal the presence of an on or an off state for each bit within each symbol of the set of symbols based on at least one of the following: determining that no signal has been received, and determining that a modulated waveform using frequency resources assigned for the on-off keyed signal has been received, the modulated waveform having been generated by modulating a waveform with a CAZAC sequence, each generated modulated waveform within a single symbol of the set of symbols having been modulated such that each generated modulated waveform is phase ramped with respect to each other, wherein the determining that a modulated waveform using frequency resources assigned for the on-off keyed signal has been received comprises detecting the CAZAC sequence within each modulated waveform; decoding the payload based on the determined presence of an on or an off state for each bit within each symbol of the set of symbols; and determining at least one action to be performed based on the decoded payload.

The instructions may be for performing the optional features set out in relation to the method mentioned above.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods. The tern non-transitory as used herein, is a limitation of the medium itself (i.e., tangible, not a signal) as opposed to a limitation on data storage persistency (e.g. RAM vs ROM).

As used in this application, the term "circuitry" may refer to one or more or all of the following:

   (a) hardware-only circuit implementations (such as implementations in only analog and/or digital circuitry) and
   (b) combinations of hardware circuits and software, such as (as applicable):

      (i) a combination of analog and/or digital hardware circuit(s) with software/firmware and
      (ii) any portions of hardware processor(s) with software (including digital signal processor(s)), software, and memory(ies) that work together to cause an apparatus, such as a mobile phone or server, to perform various functions) and

   (c) hardware circuit(s) and or processor(s), such as a microprocessor(s) or a portion of a microprocessor(s), that requires software (e.g., firmware) for operation, but the software may not be present when it is not needed for operation.

This definition of circuitry applies to all uses of this term in this application, including in any claims. As a further example, as used in this application, the term circuitry also covers an implementation of merely a hardware circuit or processor (or multiple processors) or portion of a hardware circuit or processor and its (or their) accompanying software and/or firmware. The term circuitry also covers, for example and if applicable to the particular claim element, a baseband integrated circuit or processor integrated circuit for a mobile device or a similar integrated circuit in server, a cellular network device, or other computing or network device.

As used herein, "at least one of the following: <a list of two or more elements>" and "at least one of <a list of two or more elements>" and similar wording, where the list of two or more elements are joined by "and" or "or", mean at least any one of the elements, or at least any two or more of the elements, or at least all the elements.

The ordering of method steps set out above may not be critical or fixed and the exact ordering of the steps may be varied as appropriate.

Although example embodiments of the present invention have been described in the preceding paragraphs with reference to various examples, it should be appreciated that modifications to the examples given can be made without departing from the scope of the invention as claimed.

Features described in the preceding description may be used in combinations other than the combinations explicitly described.

Although functions have been described with reference to certain features, those functions may be performable by other features whether described or not.

Although features have been described with reference to certain embodiments, those features may also be present in other embodiments whether described or not.

Whilst endeavouring in the foregoing specification to draw attention to those features of the invention believed to be of particular importance it should be understood that the Applicant claims protection in respect of any patentable feature or combination of features hereinbefore referred to and/or shown in the drawings whether or not particular emphasis has been placed thereon.

List Of Abbreviations

| | |
|---|---|
| LP-WUS | Low Power Wake-Up Signal |
| LR | Low power wake-up receiver |
| LP-WUR | Low Power Wake-Up Receiver |
| ED | Envelope detector |
| SD | Sequence detector |
| OOK | On/Off Keying (modulation) |
| DFT | Discrete Fourier Transform |
| CP | Cyclic Prefix |
| CAZAC | Constant Amplitude Zero Auto Correlation waveform |

**Claims**

1. An apparatus comprising:

at least one processor; and
at least one memory storing instructions that when executed by the at least one processor cause the apparatus at least to perform:
generating an on-off keyed signal for transmission over a set of symbols, at least one bit being conveyed within each symbol of the set of symbols, a payload of the on-off keyed signal being encoded using the at least one bit within each symbol of the set of symbols,

wherein an on and an off state for each bit is formed by at least one of the following:

not generating a signal, and
generating a modulated waveform using frequency resources assigned for the on-off keyed signal, generating the modulated waveform comprising modulating a waveform with a constant amplitude zero autocorrelation, CAZAC, sequence, wherein each generated modulated waveform within a single symbol of the set of symbols is modulated such that each generated modulated waveform is phase ramped with respect to each other; and
transmitting the on-off keyed signal to at least one user equipment.

2. An apparatus according to claim 1, wherein at least two bits are conveyed within each symbol.

3. An apparatus according to any preceding claim, wherein at least four bits are conveyed within each symbol.

4. An apparatus according to any preceding claim, wherein the waveform comprises a pulse shaping function.

5. An apparatus according to any preceding claim, wherein the CAZAC sequence comprises a chirp sequence.

6. An apparatus according to any preceding claim, wherein the CAZAC sequence comprises a Zadoff-Chu sequence.

7. An apparatus according to any preceding claim, wherein generating the on-off keyed signal comprises summing each generated pulse waveform within a single symbol of the set of symbols.

8. An apparatus according to any preceding claim, wherein the payload of the on-off keyed signal is encoded using transitions between the on and the off state.

9. An apparatus according to any preceding claim, wherein the off state for each bit is defined by not generating a signal and the on state for each bit is defined by generating the pulse waveform.

10. An apparatus according to any preceding claim, wherein the on-off keyed signal comprises a low power wake-up signal for the at least one user equipment.

11. An apparatus comprising:

at least one processor; and
at least one memory storing instructions that when executed by the at least one processor cause the apparatus at least to perform:

receiving an on-off keyed signal over a set of symbols, at least one bit being conveyed within each symbol of the set of symbols, a payload of the on-off keyed signal being encoded using the at least one bit within each symbol of the set of symbols;
determining from the on-off keyed signal the presence of an on or an off state for each bit within each symbol of the set of symbols based on at least one of the following:

determining that no signal has been received, and
determining that a modulated waveform using frequency resources assigned for the on-off keyed signal has been received, the modulated waveform having been generated by modulating a waveform with a CAZAC sequence, each generated modulated waveform within a single symbol of the set of symbols having been modulated such that each generated modulated waveform is phase ramped with respect to each other;

decoding the payload based on the determined presence of an on or an off state for each bit within each symbol of the set of symbols; and
determining at least one action to be performed based on the decoded payload.

12. An apparatus according to claim 11, wherein at least two bits are conveyed within each symbol.

13. An apparatus according to claim 11 or claim 12, wherein at least four bits are conveyed within each symbol.

14. An apparatus according to any one of claims 11 to 13, wherein the determining that a modulated waveform using frequency resources assigned for the on-off keyed signal has been received comprises at least one of:

detecting an envelope of each modulated waveform; and
detecting the CAZAC sequence within each modulated waveform.

15. An apparatus according to claim 14, wherein, when the detecting comprises detecting the CAZAC sequence within each modulated waveform, determining the presence of an on state comprises identifying the CAZAC sequence within the modulated waveform.

16. An apparatus according to claim 15, wherein, when the detecting comprises detecting the CAZAC sequence within each modulated waveform, the apparatus is preconfigured with an indication of the CAZAC sequence.

17. An apparatus according to any one of claims 11 to 16, wherein the apparatus is preconfigured with an indication of at least one of:

a number of bits being conveyed within each symbol;
the set of symbols;
the frequency resources assigned for the on-off keyed signal; and
the waveform.

18. An apparatus according to any one of claims 11 to 17, wherein the on-off keyed signal comprises a low power wake up signal and the at least one action to be performed comprises: beginning to monitor at least one of the following: paging and PDCCH.

19. A method performed at a network node, the method comprising:
generating an on-off keyed signal for transmission over a set of symbols, at least one bit being conveyed within each symbol of the set of symbols, a payload of the on-off keyed signal being encoded using the at least one bit within each symbol of the set of symbols,
wherein an on and an off state for each bit is formed by at least one of the following:

not generating a signal, and
generating a modulated waveform using frequency resources assigned for the on-off keyed signal, generating the modulated waveform comprising modulating a waveform with a constant amplitude zero autocorrelation, CAZAC, sequence, wherein each generated modulated waveform within a single symbol of the set of symbols is modulated such that each generated modulated waveform is phase ramped with respect to each other; and
transmitting the on-off keyed signal to at least one user equipment.

20. A method performed at a user equipment, the method comprising:

receiving an on-off keyed signal over a set of symbols, at least one bit being conveyed within each symbol of the set of symbols, a payload of the on-off keyed signal being encoded using the at least one bit within each symbol of the set of symbols;
determining from the on-off keyed signal the presence of an on or an off state for each bit within each symbol of the set of symbols based on at least one of the following:

determining that no signal has been received, and
determining that a modulated waveform using frequency resources assigned for the on-off keyed signal has been received, the modulated waveform having been generated by modulating a waveform with a CAZAC sequence, each generated modulated waveform within a single symbol of the set of symbols having been modulated such that each generated modulated waveform is phase ramped with respect to each other;

decoding the payload based on the determined presence of an on or an off state for each bit within each symbol of the set of symbols; and
determining at least one action to be performed based on the decoded payload.

FIG. 1

FIG. 2

FIG. 3

EP 4 633 248 A1

FIG. 4

```
┌─────────┐
│         │
│   S10   │
│         │
└────┬────┘
     │
     ▼
┌─────────┐
│         │
│   S20   │
│         │
└─────────┘
```

FIG. 5

```
┌─────────┐
│         │
│  S100   │
│         │
└────┬────┘
     │
     ▼
┌─────────┐
│         │
│  S200   │
│         │
└─────────┘
```

FIG. 6

User Equipment

411 — Processor

413 — Transceiver

412 — Memory

LR

414

410

Network Entity

421 — Processor

423 — Transceiver

422 — Memory

420

FIG. 7

Europäisches Patentamt
European Patent Office
Office européen des brevets

# EUROPEAN SEARCH REPORT

**Application Number**

EP 25 16 0126

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SUKCHEL YANG ET AL: "Discussion on L1 signal design and procedure for LP-WUS", 3GPP DRAFT; R1-2307795; TYPE DISCUSSION; FS_NR_LPWUS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Toulouse, FR; 20230821 - 20230825 11 August 2023 (2023-08-11), XP052437015, Retrieved from the Internet: URL:https://www.3gpp.org/ftp/TSG_RAN/WG1_RL1/TSGR1_114/Docs/R1-2307795.zip R1-2307795.docx [retrieved on 2023-08-11] * page 6 * | 1-20 | INV. H04W52/02 H04L25/49 H04L27/02 H04L27/26 |
| X | YAN CHENG ET AL: "Further details on signal design and procedure for LP-WUS", 3GPP DRAFT; R1-2304620; TYPE DISCUSSION; FS_NR_LPWUS, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG1, no. Incheon, KR; 20230522 - 20230526 15 May 2023 (2023-05-15), XP052310075, Retrieved from the Internet: URL:https://www.3gpp.org/ftp/TSG_RAN/WG1_RL1/TSGR1_113/Docs/R1-2304620.zip R1-2304620.docx [retrieved on 2023-05-15] * pages 4,9 * | 1-20 | TECHNICAL FIELDS SEARCHED (IPC) H04L H04W |

The present search report has been drawn up for all claims

| Place of search | Date of completion of the search | Examiner |
|---|---|---|
| Berlin | 1 August 2025 | Feng, Mei |

EPO FORM 1503 03.82 (P04C01)